# EUROPEAN PATENT APPLICATION

(11) **EP 3 536 957 A1**
(43) Date of publication of application: **11.09.2019**
(21) Application number: 17867678.9
(22) Date of filing: 02.11.2017
(51) Int. Cl.: F04C 5/00, B67D 1/10, F16H 1/06, F16H 1/16, F16H 1/20

(54) **PUMP MECHANISM AND BEVERAGE DISPENSER**

(30) Priority: 02.11.2016 JP 2016215327
(71) Applicant: Suntory Holdings Limited, Osaka-shi, Osaka 530-8203 (JP)
(72) Inventor: SUZUKI, Yuuji, Kawasaki-shi Kanagawa 211-0067 (JP); AIHARA, Masatoshi, Tokyo 135-8631 (JP); YOKOYAMA, Hiroki, Tokyo135-8631 (JP); SAKAI, Yasufumi, Tokyo 164-0011 (JP); IKEDA, Ryuta, Miyakonojo-shi Miyazaki 885-0006 (JP)
(74) Representative: Vossius & Partner Patentanwälte Rechtsanwälte mbB
(86) International application number: PCT/JP2017/039786
(87) International publication number: WO 2018/084258

(57) **Abstract**

Provided is a pump mechanism that allows a beverage dispenser to be formed compact in its width direction in spite of inclusion of a plurality of tube pumps. A first tube pump 10 and a second tube pump 20 are disposed on the left and right sides of a motor M on more front side than this motor M in such a manner that a first rotational shaft 13 of a first rotor 12 and a second rotational shaft 23 of a second rotor 22 extend perpendicularly to an output shaft S. A first transmission mechanism 30 for transmitting power outputted from the output shaft S to the first rotor 12 includes a first clutch mechanism configured to transmit rotation of the output shaft S in a first direction to the first rotor 12, but not to transmit rotation of the output shaft in a second direction to the first rotor 12. A second transmission mechanism 40 for transmitting the power outputted from the output shaft S to the second rotor 22 includes a second clutch mechanism configured to transmit the rotation of the output shaft S in the second direction to the second rotor 22, but not to transmit rotation of the output shaft in the first direction to the second rotor 22.

## Description

### TECHNICAL FIELD

The present invention relates to a pump mechanism provided in a beverage dispenser and configured to discharge an amount of beverage from a bag-like container charged with the beverage.

### BACKGROUND ART

Patent Document 1 discloses a pump mechanism configured to be capable of discharging beverage individually from respective two units of bag-in-box (to be referred to as "BIB" hereinafter) mounted in a beverage dispenser installed in a drinking/eating shop or the like by means of a single pump-driving motor.

This pump mechanism is a tube type mechanism disposed in midway of piping of a discharging tube drawn downwards from the BIB and configured to discharge beverage by squeezingly drawing the tube; and its pump is comprised of a rotor having a roller operably coupled to a drive motor and tube guides disposed on the periphery of the rotor in opposition to each other across the discharging tube; and the mechanism includes to sets of rotors disposed side by side on the left and right. And, the respective rotor and a single reversible drive motor are coupled to each other via one-way clutch. Discharging tubes drawn out individually from two BIB's accommodating beverage are sandwiched between each rotor and the tube guide. In operation, beverage is disposed individually from each BIB via the rotor rotated in association with forward/reverse rotation of the drive motor.

### BACKGROUND ART DOCUMENT

Patent Document 1: Japanese Unexamined Patent Application Publication Hei. 11-30186

### SUMMARY OF THE INVENTION

### PROBLEM TO BE SOLVED BY INVENTION

However, the pump mechanism disclosed in Patent Document 1 is configured such that rotors of two tube pumps are arranged to be rotatable about rotational shafts parallel with an output shaft of the drive motor, on the left and right side of this drive motor. Thus, the width size of the beverage dispenser including this pump mechanism would tend to be large.

### SOLUTION

In view of the above-described problem with the prior art, the object of the present invention is to provide a pump mechanism that allows a beverage dispenser to be formed compact in its width direction in spite of inclusion of a plurality of tube pumps and to provide also such beverage dispenser.

For accomplishing the above-noted object, according to a characterizing feature of a pump mechanism relating to this invention, there is provided a pump mechanism mounted in a beverage dispenser and configured to discharge an amount of beverage from a bag-like container charged with the beverage, the pump mechanism comprises:
a first tube pump disposed in midway of a first tube connected to a first bag-like container charged with beverage;
a second tube pump disposed in midway of a second tube connected to a second bag-like container charged with beverage; and
a single motor for diving the first tube pump and the second tube pump;
the motor being disposed with an output shaft thereof extending from a back side to a front side of the pump mechanism;
the first tube pump and the second tube pump being disposed on the left and right sides of the motor on more front side than this motor as seen in a plan view in such a manner that a first rotational shaft of a first rotor included in the first tube pump and a second rotational shaft of a second rotor included in the second tube pump extend perpendicularly to the output shaft of the motor;
a first transmission mechanism for transmitting power outputted from the output shaft to the first rotor;
a second transmission mechanism for transmitting the power outputted from the output shaft to the second rotor;
the first transmission mechanism including a first clutch mechanism configured to transmit rotation of the output shaft in a first direction to the first rotor, but not to transmit rotation of the output shaft in a second direction to the first rotor; and
the second transmission mechanism including a second clutch mechanism configured to transmit the rotation of the output shaft in the second direction to the second rotor, but not to transmit rotation of the output shaft in the first direction to the second rotor.

With the above-described arrangement, in the pump mechanism, the first rotor and the second rotor can be disposed along the depth (near/far side) direction. Thus, compared with the conventional pump mechanism in which rotors of two tube pumps are disposed along the width direction, the width size of the beverage dispenser having the pump mechanism with the above-described arrangement can be formed small. The first clutch mechanism allows transmission of rotation of the motor in the first direction to the first tube pump, but not allowing transmission of rotation of the motor in the second direction to the first tube pump. Conversely, the second clutch mechanism allows transmission of the rotation of the motor in the second direction to the second tube pump, but not allowing transmission of the rotation of the motor in the first direction to the second tube pump. Accordingly, with provision of the first clutch mechanism and the second clutch mechanism, by only switching over the rotational direction of the single motor, it is possible to drive the first tube pump or the second tube pump selectively. Incidentally, the first clutch mechanism and the second clutch mechanism can respectively be a sprag type one-way clutch or a cam type one-way clutch, for instance.

In the present invention, preferably:
the first transmission mechanism includes a first input gear mounted on a first transmission shaft parallel with the output shaft and intersecting or offset from the first rotational shaft and configured to receive power from an output gear mounted on the output shaft and a first transmission gear rotatable with the first input gear and meshed with a first transmitted gear non-rotatably mounted on the first rotational shaft;
the second transmission mechanism includes a second input gear mounted on a second transmission shaft parallel with the output shaft and intersecting or offset from the second rotational shaft and configured to receive power from the output gear and a second transmission gear rotatable with the second input gear and meshed with a second transmitted gear non-rotatably mounted on the second rotational shaft;
the first input gear is supported to the first transmission shaft via the first clutch mechanism;
the second input gear is supported to the second transmission shaft via the second clutch mechanism; and
either one of the first input gear and the second input gear is directly meshed with the output gear and the other thereof is meshed with the output shaft via a relay gear.

The first transmission gear, the second transmission gear, the first transmitted gear and the second transmitted gear respectively can be bevel gears mounted on intersecting shafts or spiral gears or worm gears mounted on offset shafts. Incidentally, here the language "intersecting of shafts" means that two shafts intersect each other. Further, the language "offset of shafts" means that two shafts do not intersect each other or not extend parallel with each other, either.

When the motor is rotated in the first direction, the first clutch mechanism transmits the power, so the first tube pump is driven, but as the second clutch mechanism does not transmit the power, the second tube pump is not driven. Conversely, when the motor is rotated in the second direction, the first clutch mechanism does not transmit the power, so the first tube pump is not driven, but as the second clutch mechanism transmits the power, the second tube pump is driven.

As the first transmission gear, the second transmission gear, the first transmitted gear and the second transmitted gear can be realized by gears having an identical arrangement, e.g. by using gears having a same teeth-cutting direction. So, reduction of manufacture cost can be realized.

Either one of the first input gear and the second input gear is directly meshed with the output gear and the other thereof is meshed with the output gear via a relay gear. So, when this pump mechanism is provided in a beverage dispenser, the first rotor and the second rotor can be rotated in a same direction when the beverage dispenser is viewed from its front side.

In the present invention, preferably:
the first tube pump includes a first tube guide having an inner circumferential face of an arc extending along a path of a first roller included in the first rotor, the first tube guide being posture switchable between a restraining posture for squeezingly drawing the first tube by the roller moving along the inner circumferential face and a releasing posture in which the first tube guide is spaced apart from the first roller on the front side in order to allow attachment/detachment of the first tube; and
the second tube pump includes a second tube guide having an inner circumferential face of an arc extending along a path of a second roller included in the second rotor, the second tube guide being posture switchable between a restraining posture for squeezingly drawing the second tube by the roller moving along the inner circumferential face and a releasing posture in which the second tube guide is spaced apart from the second roller on the front side in order to allow attachment/detachment of the second tube.

By setting the first tube guide and the second tube guide to the respective releasing postures on the front side of the pump mechanism, the first tube and the second tube can be attached/detached via the front side of the pump mechanism, thus facilitating change of the bag-like containers charged with beverage.

In the present invention, preferably, the first transmission gear and the second transmission gear are worms and the first transmitted gear and the second transmitted gear are worm wheels.

The respective tube pump is configured to squeezingly extract the beverage inside the tube by the roller, thus requiring high torque. With using worms and worm wheels, high torque power can be transmitted from the motor.

For accomplishing the above-noted object, according to a characterizing feature of a beverage dispenser relating also to the present invention, the beverage dispenser comprises a pump mechanism having any one of the above-described characterizing features.

With the above-described arrangement, it has become possible to provide a beverage dispenser that can be formed compact in its width direction in spite of inclusion of a plurality of tube pumps.

### BRIEF DESCRIPTION OF THE DRAWINGS

Fig. 1 is a front view of a beverage dispenser according to the present invention,
Fig. 2 is a front view of a pump mechanism according to the present invention,
Fig. 3 is a plan view of the pump mechanism according to the present invention,
Fig. 4 is a perspective view of the pump mechanism according to the present invention,
Fig. 5 is a perspective view of the pump mechanism according to the present invention,
Fig. 6 is a perspective view of the pump mechanisms according to the present invention, and
Fig. 7 is a front view of a beverage dispenser relating to a further embodiment of the present invention.

### MODE OF EMBODYING THE INVENTION

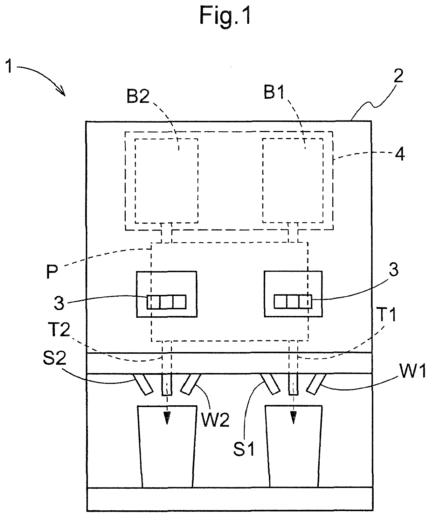

As shown in Fig. 1, a beverage dispenser 1 is arranged such that an openable/closable door is provided at a front face of a dispenser body 2 which is a box-like component having an opened front face and operational buttons 3 are provided in this door.

At an upper portion inside the dispenser body 2, there is provided a storage 4 for accommodating bag-in-boxes (to be referred to simply as "containers" hereinafter) B as reservoirs for beverages such as tea, juice, etc. The container B is a structure in which a bag-like container charged with beverage under a sealed state is contained in a box-like container. Incidentally, the term "beverage" as used herein includes a concentrate liquid which is made into target beverage when diluted.

At a portion inside the dispenser body 2 and under the storage 4, there is provided a pump mechanism P for dispensing the beverage charged in the containers B.

In the instant embodiment, within the storage 4 of the beverage dispenser 1, two containers B1, B2 can be accommodated. And, the single pump mechanism P is provided for these containers B1 and B2.

Tubes T1, T2, which can be provided integrally with or separately from the containers B1, B2, have upper ends thereof connected to these containers B1, B2 and constitute inlets for beverage charged in these bottles B1, B2. Lower ends of the tubes T1, T2 constitute outlets for the beverage charged in these bottles B1, B2. Incidentally, on the lateral sides of the outlets, there are provided dilution water nozzles W1, W2 for feeding dilution water and carbonated water nozzles S1, S2 for feeding carbonated water.

The operational buttons 3 are disposed in correspondence with the respective containers B1, B2. In association with an operation on the operational button 3, the pump mechanism P will be driven, so that beverage will be dispensed into a cup placed on a cup rest positioned under the outlet via this outlet formed at the lower end of the respective tube T1, T2. And, depending on need, dilution water can be fed via the dilution water nozzle W1, W2 or carbonated water can be fed via the carbonated water nozzle S1, S2.

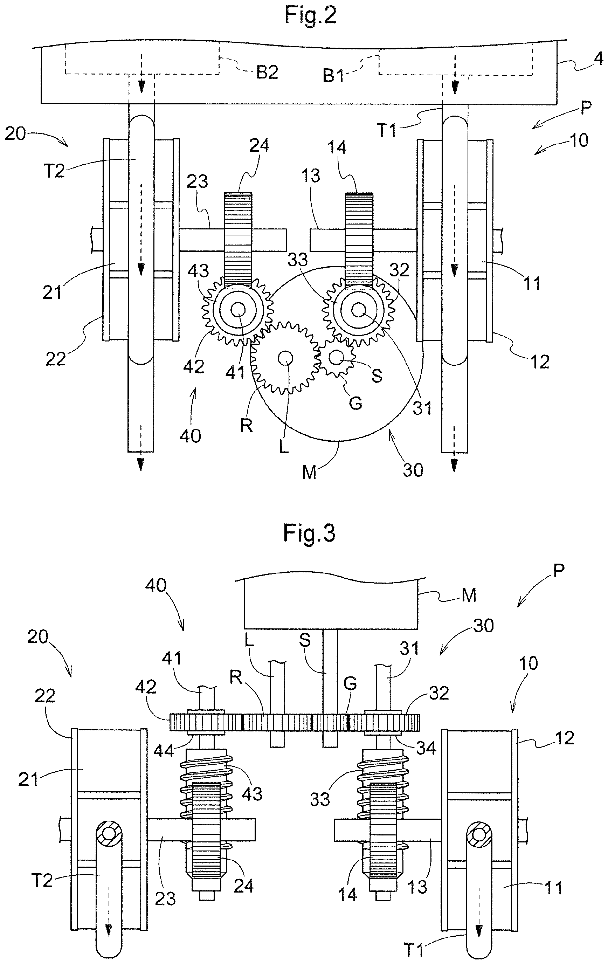

As shown in Fig. 2 and Fig. 3, the pump mechanism P includes a first tube pump 10 and a second tube pump 20 corresponding respectively to the containers B1, B2, a single motor M for driving these first and second tube pumps 10, 20, a first transmission mechanism 30 for transmitting power of the motor M to the first tube pump 10 and a second transmission mechanism 40 for transmitting power of the motor M to the second tube pump 20.

The first tube pump 10 and the second tube pump 20 include a plurality of rollers 11, 21 movable along the inner circumferential faces of a first tube guide 50 and a second tube guide 60 for guiding the beverage inside the tubes T1, T2 and rotors 12, 22 for rotatable by the power of the motor M.

The plurality of rollers 11, 21 are rotatably mounted at positions equidistantly spaced apart from each other in the circumferential direction about the rotational axes of the rotors 12, 22.

A first rotational shaft 13 of the first rotor 12 included in the first tube pump 10 and a second rotational shaft 23 of the second rotor 22 included in the second tube pump 20 are disposed on a common axis.

The first rotational shaft 13 and the second rotational shaft 23 are rotatably supported via unillustrated bearings. The first rotational shaft 13 and the second rotational shaft 23 are provided with rotary encoders, so that via these rotary encoders, rotations of the first rotational shaft 13 and the second rotational shaft 23 can be determined and controlled.

The motor M is disposed between the first tube pump 10 and the second tube pump 20 as seen in a plan view. This motor M is a motor with its output shaft S being rotatable in both directions, so its rotation is controlled to either the clockwise direction or the counter-clockwise direction in accordance with an operation on the operational button 3. The first rotational shaft 13 and the second rotational shaft 23 are disposed to be perpendicular to the output shaft S.

The first transmission mechanism 30 includes a first input gear 32 and a first transmission gear 33. The first input gear 32 is mounted on a first transmission shaft 31 parallel with the output shaft S and offset from the first rotational shaft 13 and is meshed with an output gear G mounted on the output shaft S. The first transmission gear 33 is rotatable with the first input gear 32 and is meshed with a first transmitted gear 14 which is non-rotatably mounted on the first rotational shaft 13.

The second transmission mechanism 40 includes a second input gear 42 and a second a second transmission gear 43. The second input gear is mounted on a second transmission shaft 41 parallel with the output shaft S and offset from the second rotational shaft 23 and is meshed, via a relay gear R rotatable about a relay shaft L parallel with the output shaft S, with the output gear G mounted on the output shaft S. The second transmission gear 43 is rotatable with the second input gear 42 and is meshed with a second transmitted gear 24 which is non-rotatably mounted on the second rotational shaft 23.

In the instant embodiment, the first input gear 32 is directly meshed with the output gear G, whereas the second input gear 42 is meshed with the output gear G via the relay gear R. With this arrangement, the first rotor 12 and the second rotor 22 both can be rotated in the same direction, when the beverage dispenser 1 is seen in its front view.

The first transmission gear 33 and the second transmission gear 43 respectively is a worm mounted on the first transmission shaft 31 or the second transmission shaft 41. Whereas, the first transmitted gear 14 and the second transmitted gear 24 respectively is a worm wheel.

Incidentally, the first input gear 32 is supported to the first transmission shaft 31 via a first clutch mechanism 34. And, the second input gear 42 is supported to the second transmission shaft 41 via a second clutch mechanism 44. Advantageously, these first clutch mechanism 34 and second clutch mechanism 44 can be sprag type one-way clutch or cam type one-way clutch. However, they are not limited thereto.

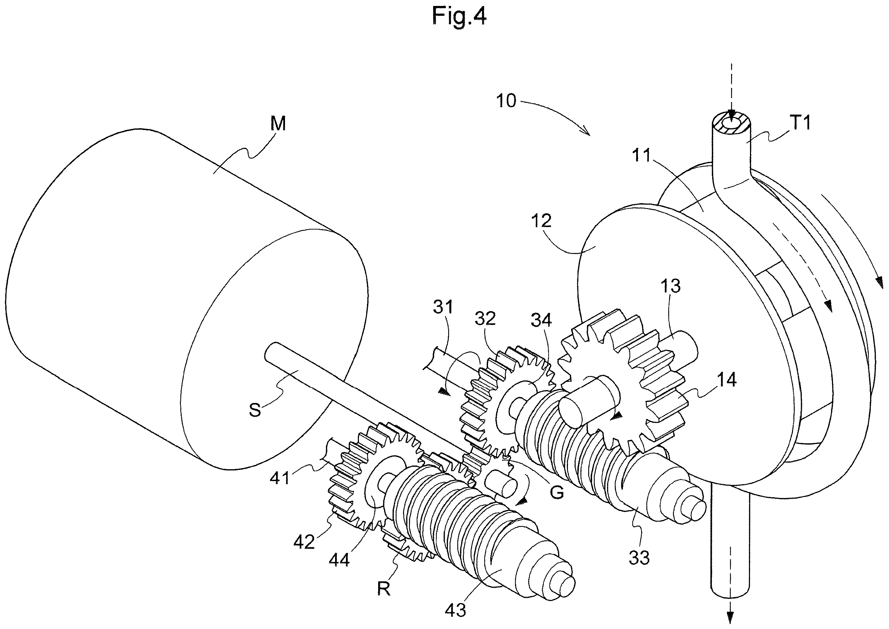

As shown in Fig. 4, the first clutch mechanism 34 is configured to transmit rotation of the motor M in a first direction (clockwise) to the first input gear 32, but not to transmit rotation of the motor M in a second direction (counter-clockwise) to the first input gear 32.

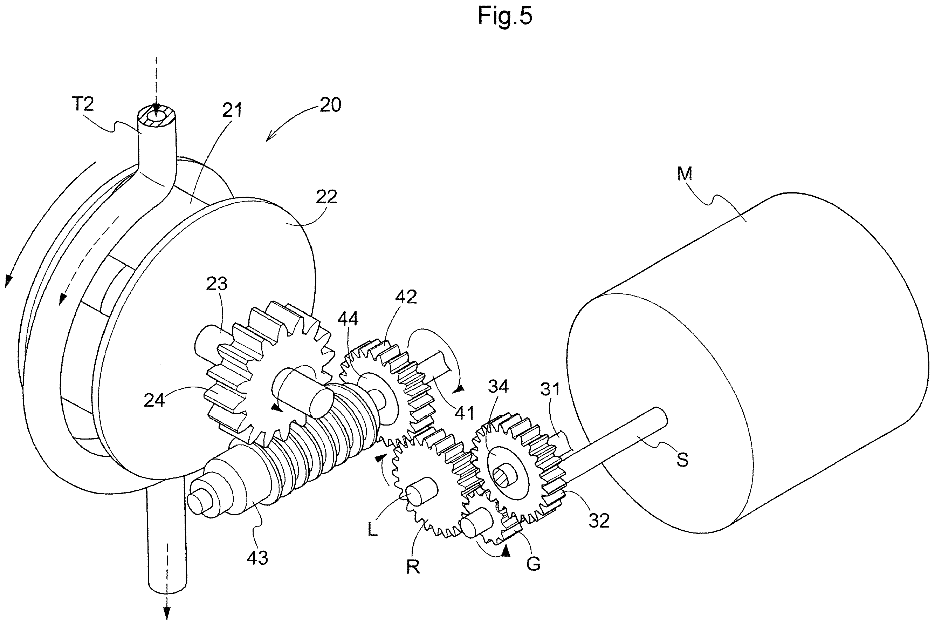

Further, as shown in Fig. 5, the second clutch mechanism 44 is configured to transmit rotation of the motor M in the second direction (counter-clockwise) to the second input gear 42, but not to transmit rotation of the motor M in the first direction (clockwise) to the second input gear 42.

Therefore, when the motor M is rotated in the first direction (clockwise), the first input gear 32, the first transmission gear 33 and the first transmitted gear 14 are rotated, whereby the first tube pump 10 is driven, so that an amount of beverage drawn into the first tube T1 will be discharged via the outlet. In this, the second tube pump 20 is not driven.

Conversely, when the motor M is rotated in the second direction (counter-clockwise), the second input gear 42, the second transmission gear 43 and the second transmitted gear 24 are rotated, whereby the second tube pump 20 is driven, so that an amount of beverage drawn into the second tube T2 will be discharged via the outlet. In this, the first tube pump 10 is not driven.

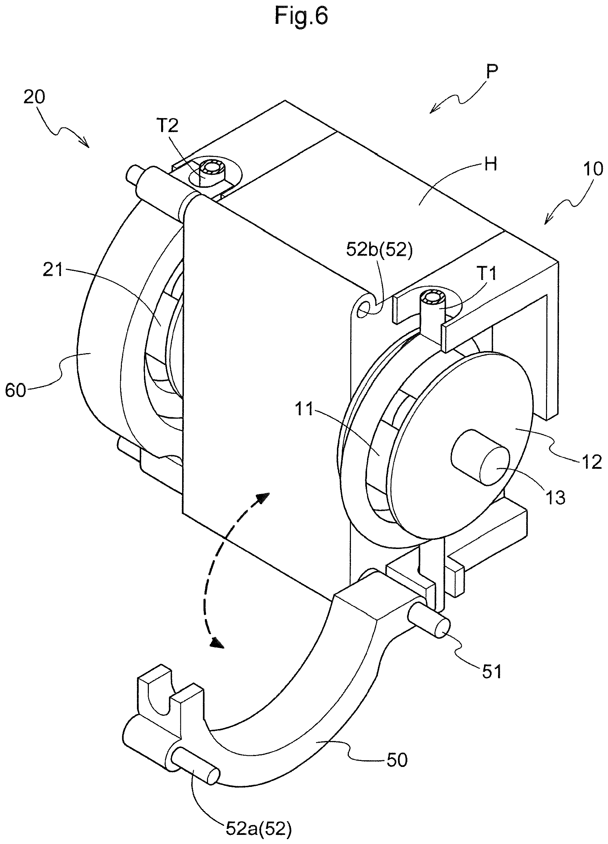

Next, a first tube guide 50 and a second tube guide 60 will be explained. Incidentally, since the second tube guide 60 has an identical arrangement to the first guide guide 50, explanation thereof will be omitted here. As shown in Fig. 6, the first tube guide 50 has an inner circumferential face having an arcuate shape and is configured to be capable of holding the first tube T1 for feeding beverage between this tube guide and a first roller 11 included in the first rotor 12 and movable along an inner circumferential face. The first tube guide 50 is pivotable about a first pivot shaft 51 provided at its lower end and parallel with the first rotational shaft 13 to be posture switchable between a restraining posture for squeezingly drawing the first tube T1 in cooperation with the first roller 11 and a releasing posture away from the first roller 11 for allowing attachment/detachment of the first tube T1.

Incidentally, the first tube guide 50, at its upper end, is provided with a fixing mechanism 52 for fixing the restraining posture of the first tube guide 50. This fixing mechanism 52 consists essentially of an engaging hole portion 52b provided on the side of a box body H accommodating the first transmission mechanism 30, the second transmission mechanism 40, etc. and an engaging protrusion 52a extending through the upper end portion of the first tube guide 50 and having a leading end engageable with the engaging hole portion 52b. Incidentally, the engaging protrusion 52a is urged by an unillustrated spring to the direction for engagement with the engaging hole portion 52b.

When the container B1 is to be replaced, the door of the dispenser body 2 will be opened and then the trailing end of the engaging protrusion 52a will be pinched by fingers and its leading end will be pulled out of the engaging hole portion 52b to release the engagement, after which the first tube guide 50 will be pivoted to the front side and the tube T1 connected to the container B1 will be taken out from between the first tube guide 50 and the roller 11 and then, the empty container B1 will be removed from the storage 4.

Thereafter, a new container B1 will be accommodated in the storage 4 and the tube T1 as connected to the container B1 will be passed between the first tube guide 50 and the first roller 11. Then, the first tube guide 50 will be closed and the lower end of the tube T1 will be cut off with a pair of scissors or the like, thus forming its outlet. Replacement of the container B2 can be carried out similarly.

As the first tube pump 10 and the second tube pump 20 are disposed in such a manner that from the front side in the front view of the pump mechanism P, the tubes T1, T2 are disposed in this order among the rotors 12, 22, the first tube guide 50 and the second tube guide 60, replacement of the containers B1, B2 can be carried out easily via the front face of the beverage dispenser 1.

In the foregoing embodiment, there was explained the arrangement in which rotation of the output gear G of the motor M is transmitted to the second input gear 42 included in the second transmission mechanism 40 via the relay gear R. However, this relay gear R is not essential. In such case, however, it will become necessary to reverse the teeth-cutting direction of the worm which is the second transmission gear 43 or the direction of allowing or inhibiting power transmission by the second clutch mechanism 44 from the currently employed direction. Further, the relay gear R may be provided on the side of the first transmission mechanism 30, rather than on the side of the second transmission mechanism 40.

In the arrangement in the foregoing embodiment, when the motor M is rotated in the first direction (clockwise), the first tube pump 10 is driven, but the second tube pump 20 is not driven. Whereas, when the motor M is rotated in the second direction (counter-clockwise), the second tube pump 20 is driven, but the first tube pump 10 is not driven. However, the invention is not limited to this arrangement. By reversing the teeth-cutting direction of the worm which respectively is the first transmission gear 33 and the second transmission gear 43 or the direction of allowing or inhibiting power transmission by the first clutch mechanism 34 and the second clutch mechanism 44 from the currently employed direction, it is also possible to arrange such that when the motor M is rotated in the first direction (clockwise), the second tube pump 20 is driven but the first tube pump is not driven and when the motor M is rotated in the second direction (counter-clockwise), the first tube pump 10 is driven but the second tube pump 20 is not driven.

In the above-described embodiment, there was explained the arrangement in which the first transmission gear 33 and the second transmission gear 43 are worms mounted on the first transmission shaft 31 or the second transmission shaft 41 and the first transmitted gear 14 and the second transmitted gear 24 are worm wheels. However, the invention is not limited to this arrangement. The first transmission gear 33 and the second transmission gear 43, and the first transmitted gear 14 and the second transmitted gear 24, respectively can be spiral gears meshed with each other.

In the foregoing embodiment, there was explained the arrangement in which the first rotational shaft 13 and the first transmission shaft 31 are disposed to be offset from each other and similarly, the second rotational shaft 23 and the second transmission shaft 41 are disposed to be offset from each other. However, the invention is not limited to this arrangement. Alternatively, the first rotational shaft 13 and the first transmission shaft 31 may disposed to intersect each other and similarly, the second rotational shaft 23 and the second transmission shaft 41 may be disposed to intersect each other. In this case, advantageously, the first transmission gear 33 and the second transmission gear 43, and the first transmitted gear 14 and the second transmitted gear 24, respectively can be bevel gears meshed with each other.

In the foregoing embodiment, there was explained the arrangement in which the first clutch mechanism 34 and the second clutch mechanism 44 respectively is provided between the first input gear 32 and the first transmission shaft 31 or between the second input gear 42 and the second transmission shaft 41. However, the invention is not limited to this arrangement. Alternatively, the first transmitted gear 14 may be supported to the first rotational shaft 13 via the first clutch mechanism 34 and the second transmitted gear 24 may be supported to the second rotational shaft 23 via the second clutch mechanism 44.

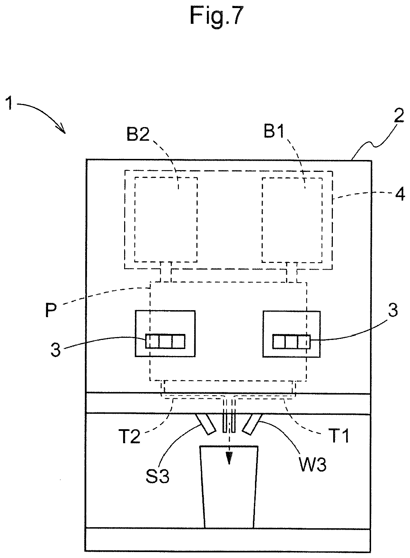

In the foregoing embodiment, there was explained the arrangement of the beverage dispenser 1 in which beverage is discharged respectively from the tube T1 and the tube T2 into cups set at different positions. Referring to an arrangement different from such beverage dispenser 1 as shown in Fig. 1, for instance, as shown in Fig. 7, upper ends of the tubes T1, T2 of the beverage dispenser 1 constitute inlets for beverage charged in the containers B1, B2, whereas outlets positioned at the lower ends of the tubes T1, T2 are configured to discharge beverage to a cup set at a same position. Incidentally, on the lateral sides of the two outlets, there are provided a dilution water nozzle W3 for feeding dilution water and a carbonated water nozzle S3 for feeding carbonated water.

In accordance with an operation on the operational button 3, the pump mechanism P will be driven, so that via the two outlets at the lower ends of the tubes T1, T2, beverage will be discharged into a cut set on a cup rest provided under the two outlets. And, when needed, dilution water will be fed via the dilution water nozzle W3 or carbonated water will be fed via the carbonated water nozzle S3.

In the foregoing embodiment, there was explained a case in which the beverage dispenser 1 is provided with a single pump mechanism P. However, the invention is not limited thereto. Alternatively, the beverage dispenser 1 may be provided with a plurality of pump mechanisms P.

The above-described embodiments are only exemplary of the present invention. The present invention is not limited thereto. Rather, various modifications of the specific arrangements of the respective parts thereof can be made when appropriate, within the range capable of achieving the intended function/effect of the present invention.

### DESCRIPTON OF SIGNS

- 1:: beverage dispenser
- 10:: first tube pump
- 10:: tube pump
- 11:: first roller
- 12:: first rotor
- 13:: first rotational shaft
- 14:: first transmitted gear
- 20:: second tube pump
- 20:: tube pump
- 21:: second roller
- 22:: second rotor
- 23:: second rotational shaft
- 24:: second transmitted gear
- 30:: first transmission mechanism
- 31:: first transmission shaft
- 32:: first input gear
- 33:: first transmission gear
- 34:: first clutch mechanism
- 40:: second transmission mechanism
- 41:: second transmission shaft
- 42:: second input gear
- 43:: second transmission gear
- 44:: second clutch mechanism
- 50:: first tube guide
- 60:: second tube guide
- 100:: beverage dispenser
- B:: container
- B1:: container
- B2:: container
- G:: output gear
- M:: motor
- P:: pump mechanism
- R:: relay gear
- S:: output shaft
- T1:: first tube
- T2:: second tube

## Claims

1. A pump mechanism mounted in a beverage dispenser and configured to discharge an amount of beverage from a bag-like container charged with the beverage, the pump mechanism comprising:
a first tube pump disposed in midway of a first tube connected to a first bag-like container charged with beverage;
a second tube pump disposed in midway of a second tube connected to a second bag-like container charged with beverage; and
a single motor for diving the first tube pump and the second tube pump;
the motor being disposed with an output shaft thereof extending from a back side to a front side of the pump mechanism;
the first tube pump and the second tube pump being disposed on the left and right sides of the motor on more front side than this motor as seen in a plan view in such a manner that a first rotational shaft of a first rotor included in the first tube pump and a second rotational shaft of a second rotor included in the second tube pump extend perpendicularly to the output shaft of the motor;
a first transmission mechanism for transmitting power outputted from the output shaft to the first rotor;
a second transmission mechanism for transmitting the power outputted from the output shaft to the second rotor;
the first transmission mechanism including a first clutch mechanism configured to transmit rotation of the output shaft in a first direction to the first rotor, but not to transmit rotation of the output shaft in a second direction to the first rotor; and
the second transmission mechanism including a second clutch mechanism configured to transmit the rotation of the output shaft in the second direction to the second rotor, but not to transmit rotation of the output shaft in the first direction to the second rotor.

2. The pump mechanism of claim 1, wherein:
the first transmission mechanism includes a first input gear mounted on a first transmission shaft parallel with the output shaft and intersecting or offset from the first rotational shaft and configured to receive power from an output gear mounted on the output shaft and a first transmission gear rotatable with the first input gear and meshed with a first transmitted gear non-rotatably mounted on the first rotational shaft;
the second transmission mechanism includes a second input gear mounted on a second transmission shaft parallel with the output shaft and intersecting or offset from the second rotational shaft and configured to receive power from the output gear and a second transmission gear rotatable with the second input gear and meshed with a second transmitted gear non-rotatably mounted on the second rotational shaft;
the first input gear is supported to the first transmission shaft via the first clutch mechanism;
the second input gear is supported to the second transmission shaft via the second clutch mechanism; and
either one of the first input gear and the second input gear is directly meshed with the output gear and the other thereof is meshed with the output shaft via a relay gear.

3. The pump mechanism of claim 2, wherein:
the first tube pump includes a first tube guide having an inner circumferential face of an arc extending along a path of a first roller included in the first rotor, the first tube guide being posture switchable between a restraining posture for squeezingly drawing the first tube by the roller moving along the inner circumferential face and a releasing posture in which the first tube guide is spaced apart from the first roller on the front side in order to allow attachment/detachment of the first tube; and
the second tube pump includes a second tube guide having an inner circumferential face of an arc extending along a path of a second roller included in the second rotor, the second tube guide being posture switchable between a restraining posture for squeezingly drawing the second tube by the roller moving along the inner circumferential face and a releasing posture in which the second tube guide is spaced apart from the second roller on the front side in order to allow attachment/detachment of the second tube.

4. The pump mechanism of claim 2 or 3, wherein the first transmission gear and the second transmission gear are worms and the first transmitted gear and the second transmitted gear are worm wheels.

5. A beverage dispenser comprising a pump mechanism of any one of claims 1-4.
